# EUROPÄISCHE PATENTSCHRIFT

(11) **EP 1 360 525 B1**
(45) Veröffentlichungstag und Bekanntmachung des Hinweises auf die Patenterteilung: **05.12.2007**
(21) Anmeldenummer: 02704627.5
(22) Anmeldetag: 04.02.2002
(51) Int. Cl.: G01V 3/08, G01V 3/15, G01D 5/24

(54) **ORTUNGSGERÄT**
LOCATING DEVICE
APPAREIL DE REPERAGE

(30) Priorität: 03.02.2001 DE 10104865; 04.02.2002 DE 10204568; 04.02.2002 DE 10204569
(43) Veröffentlichungstag der Anmeldung: 12.11.2003
(73) Patentinhaber: ROBERT BOSCH GMBH, 70442 Stuttgart (DE)
(72) Erfinder: SCHMIDT, Ewald, 71634 Ludwigsburg (DE); PFIZENMAIER, Heinz, 71540 Murrhardt (DE); LEUTZ, Steffen, 69256 Mauer (DE); IRION, Hans, 71364 Winnenden (DE); HASCH, Juergen, 73066 Uhingen (DE); CLAUSS, Stefan, 70771 Leinfelden-Echterdingen (DE); SKULTETY-BETZ, Uwe, 70771 Leinfelden-Echterdingen (DE); HAASE, Bjoern, 70182 Stuttgart (DE); HOFFMANN, Ulli, 75223 Nieffern-Oeschelbronn (DE)
(86) Internationale Anmeldenummer: PCT/DE2002/000396
(87) Internationale Veröffentlichungsnummer: WO 2002/063343

(56) Entgegenhaltungen:
- US-A- 4 859 931
- PATENT ABSTRACTS OF JAPAN vol. 1995, no. 03, 28. April 1995 (1995-04-28) & JP 06 349392 A (OMRON CORP), 22. Dezember 1994 (1994-12-22)

## Beschreibung

### Stand der Technik

Die Erfindung betrifft ein Ortungsgerät, insbesondere ein handgehaltenes Ortungsgerät zur Detektion von Einschlüssen in Wänden, Decken und/oder Böden mit Hilfe einer kapazitiven Sensorvorrichtung, die es ermöglicht, Impedanzunterschiede eines Messsignals zu detektieren und Rückschlüsse auf die die Impedanzunterschiede generierenden, verborgenden Objekte zu ziehen.

Zur Ortung von Einschlüssen im Wandmaterial werden derzeit im Wesentlichen zwei verschiedene Mess-Methoden eingesetzt. Die induktiven Verfahren, die eine erste Familie von Ortungsgeräten begründen, nutzen aus, dass das Einbringen metallischer Objekte in magnetische Wechselfelder den Verlauf der magnetischen Feldlinien beeinflußt. Dieser Einfluß der metallischen Objekte schlägt sich beispielsweise im Betrag der Impedanz einer Spule nieder, welche ein derartiges magnetisches Wechselfeld erzeugt. Induktive Verfahren sind besonders geeignet, ferromagnetische Materialien aufzuspüren. Schwierigkeiten bereitet dagegen die Suche nach nicht magnetischen Materialien, wie beispielsweise Kupfer oder auch Kunststoff. Insbesondere Kunststoffleitungen, die vermehrt im Installationsbereich genutzt werden, können mit diesem Verfahren prinzipiell nicht gefunden werden.

Die räumliche Empfindlichkeit eines induktiv arbeitenden Sensors hängt unmittelbar mit der räumlichen Verteilung der durch die Messspulen generierten Magnetfelder zusammen. Entscheidend für die Auslegung eines Sensors ist dabei die Berücksichtigung einer Richtungscharakteristik. Beim Aufsetzen des Ortungsgerätes auf ein zu untersuchendes Objekt, beispielsweise Wandmaterial, soll der Sensor möglichst nur verborgene Objekte innerhalb der Wand detektieren, so dass das Ortungsgerät nur auf Objekte, welche vor dem Sender liegen, ansprechen soll. Objekte hinter und neben dem Sensor dürfen das Meßergebnis nicht verfälschen.

Bei induktiv arbeitenden Sensoren wird dieses Problem üblicherweise durch die Verwendung von Ferritkörpern, auf denen die Spulen des Sensors des Ortungsgerätes aufgewickelt werden, gelöst. Diese Ferritkörper haben die Eigenschaft, das durch die Spulen generierten elektromagnetische Feld zu bündeln und damit in gewisser Weise zu führen. Die Bündelung des Feldes lässt sich beispielsweise durch den Verlauf der Feldlinien darstellen und auch nachweisen. Der für die Bündelung der Feldlinien und damit für die Erzeugung der Richtungscharakteristik eines solchen Sensors entscheidende Parameter ist dabei der Betrag der magnetischen Suszeptibilität des Kernmaterials (Ferritkörper). Werte der magnetischen Suszeptibilität in der Größenordnung von 100 sind mit ferromagnetischen Werkstoffen technisch problemlos und kostengünstig zu realisieren. Bei Wahl einer geeigneten Kerngeometrie kann daher für induktive Ortungsverfahren die gewünschte Richtcharakteristik mit einfachen Mitteln und geringem Kostenaufwand erzielt werden.

Eine zweite Klasse von Ortungssensoren beziehungsweise Ortungsgeräten nutzt kapazitive Verfahren zur Detektion eingeschlossener Objekte. Solche kapazitiven Verfahren werden derzeit beispielsweise zur Suche nach Unterkonstruktionen, Stützbalken und vergleichbaren Wandeinschlüssen in Leichtbauten vom Baugewerbe eingesetzt. Herzstück eines solchen kapazitiven Sensors beziehungsweise Ortungsgeräts bildet ein Kondensatorelement. Das dem Verfahren zugrundeliegende Messprinzip beruht auf der Beeinflussung der Impedanz des Messkondensators durch das ihn umgebende dielektrische Medium. Das Vorhandensein eines Objektes mit abweichender Dielektrizitätskonstante in der Umgebung des Messsensors resultiert in einer Beeinflussung der Kapazität des Sensorelementes und somit in einem elektrisch meßbaren Effekt.

Im Unterschied zu induktiv arbeitenden Ortungsgeräten ist bei kapazitiv arbeitenden Sensoren die Erzielung einer Richtcharakteristik deutlich schwieriger. Zwar ist auch hier, analog zu den beschriebenen Verfahren bei den induktiven Sensoren, der Einsatz von Werkstoffen, welche das Elektrische Feld bundeln prinzipiell denkbar, doch im Rahmen vertretbarer Kosten für solch ein gewerblich zu nutzendes Detektionssystem lassen sich realistisch nur solche Materialien einsetzen, welche geringe Werte der Dielektrizitätskonstante ε und damit eine geringe Fähigkeit zur Bündelung der elektrischen Feldes beziehungsweise zur Bündelung der das elektrische Feld beschreibenden elektrischen Feldlinien aufweisen. Typische Werte der Dielektrizitätskonstante ε für nutzbare Werkstoffe liegen in der Größenordnung von 5, so dass eine ausreichende Richtungscharakteristik den Einsatz aufwendiger und damit kostenintensiver Bündelungsmechanismen beziehungsweise Abschirmgeometrien erfordert.

Aus der US 5,726,581 ist ein kapazitiver Näherungssensor bekannt, bei dem durch das Vorliegen eines Objektes der Strom durch ein Sensorelement erhöht wird, so daß diese Stromerhöhung durch den geänderten Spannungsabfall an einem Widerstand detektiert werden kann. Zur Erzeugung einer gewissen Richtcharakteristik für das Messfeld ist auf der dem Objekt abgekehrten Seite der Sensorelektrode eine zusätzliche Abschirmungselektrode angebracht. Beide Elektroden sind mit einem gemeinsamen Massepotential verbunden.

Die auf das Objekt zurückgehende Kapazitätsänderung der Sensorelektrode wird dadurch maximiert, daß die Kapazität zwischen dem Sensorelement und der Masse minimiert wird. Dies wird dadurch erreicht, daß die elektrischen Feldlinien ausgehend von der Messelektrode über einen weiten räumlichen Bereich durch die größere Abschirmelektrode derart verformt werden, daß eine direkte Verbindung zum Massepotential nicht möglich ist. Aus diese Weise wird ebenfalls eine gewisse Richtwirkung des elektrischen Feldes der Messelektrode erzeugt

Ein weiteres Problem der Konstruktion kapazitiver Sensoren stellt ein unerwünschtes Übersprechen zwischen den Leiterflächen des Meßkondensators auf der einen Seite und den elektronischen Bausteinen der Auswerteschaltung auf der anderen Seite dar. Um auch kleine Objekte nachweise zu können müssen geringste Signale aus dem Rauschuntergrund des Messsignals herausgefiltert werden. Ein Übersprechen der elektrischen Felder des Messsignals beispielsweise auf die elektronischen Bauelemente der Auswertevorrichtung eines solchen Ortungsgerätes kann zu einer Verfälschung der Messergebnisse und damit zu der Unmöglichkeit von Präzisionsmessungen führen. Aus diesem Grunde sind diese beiden Bestandteile, das heisst, das eigentliche kapazitive Sensorelement und die elektronischen Auswerteschaltungen des kapazitiven Ortungsgerätes oft räumlich getrennt voneinander angeordnet und durch Kabel miteinander verbunden.

Der Erfindung liegt die Aufgabe zu Grunde, ein kapazitives Ortungsgerät der eingangs genannten Art anzugeben, das bei einem kompakten Aufbau, geringen Kosten und einfacher technischer Realisierbarkeit eine ausreichende Richtschärfe besitzt. Ferner liegt der Erfindung die Aufgabe zugrunde, bei einem Ortungsgerät der eingangs beschriebenen Art parasitäre Übersprechphänomene zwischen der kapazitiven Sensorvorrichtung und elektronischen Bauelementen zur Erzeugung und Auswertung des Messignales eines solchen Gerätes mit fertigungstechnisch möglichst einfachen, mechanisch aber stabilen Mitteln zu realisieren.

### Vorteile der Erfindung

Das erfindungsgemäße Ortungsgerät zur Detektion von Einschlüssen in Wänden, Decken und/oder Böden benutzt einen kapazitiven Sensor in Form eines Kondensators, dessen erste Elektrode eine Gehäusefläche der Sensorvorrichtung umfasst. Durch die erfindungsgemäße Ausgestaltung des kapazitiven Sensors ist es möglich, eine Richtungscharakteristik für den Sensor zu realisieren, ohne aufwendige, zusätzliche Bauteile zur Abschirmung des elektrischen Feldes des Kondensators in das Gehäuse der Sensorvorrichtung integrieren zu müssen.

Erfindungsgemäß besitzt die kapazitive Sensorvorrichtung ein Gehäuse, welches zum Einen den mechanischen Schutz der Sensorvorrichtung realisieren soll, zum Anderen aber gleichzeitig Teil einer ersten Elektrode eines Kondensators der kapazitiven Sensorvorrichtung ist. Mit Hilfe diese Gehäuses lässt sich in einfacher und vorteilhafter Weise dann auch eine definierte Richtcharakteristik des kapazitiven Sensorvorrichtung des Ortungsgerätes ermöglichen.

Die eigentliche Sensorvorrichtung mit ihrem Gehäuse kann dann in ein für das elektrische Feld des Sensors durchlässiges Gehäuse des Ortungsgerätes integriert werden, welcher diverse Bedienelemente und auch eine Ausgabevorrichtung für Messwerte, beispielsweise in Form eines Displays aufweist.

Durch die in den weiteren Ansprüchen aufgeführten Merkmale sind vorteilhafte Weiterbildungen und Verbesserungen des in Anspruch 1 angegebenen Ortungsgerätes möglich.

Das Gehäuse der Sensorvorrichtung bildet in einer vorteilhaften Ausführungsform des erfindungsgemäßen Ortungsgerätes einen Hohlraum, der einen mechanischen Schutz für eine zweite Elektrode des Messkondensators der kapazitiven Sensorvorrichtung bildet.

In einer vorteilhaften Ausführungsform des erfindungsgemäßen Ortungsgerätes ist die zweite Elektrode des Messkondensators der Sensorvorrichtung mechanisch mit einer Leiterplatte der Sensorvorrichtung verbunden. Die Leiterplatte selbst ist wiederum mit dem Gehäuse der Sensorvorrichtung verbunden. Auf diese Weise läßt sich ein mechanisch stabiler Aufbau für den Messkondensator bei gleichzeitiger elektrischer Trennung der beiden Kondensatorelektroden realisieren, da die elektronischen Bauteile zur Erzeugung eines Detektionssignales das Vorhandensein einer Leiterplatte oder dergleichen bereits voraussetzen.

In vorteilhafter Weise läßt sich die Leiterplatte mechanisch mit einer Gehäusefläche, beispielsweise einer Schulter des Gehäuses der Sensorvorrichtung verbinden, in dem sie an das Gehäuse angeschraubt oder vernietet, verschweisst oder verlötet wird. Andere dem Fachmann bekannte Verbindungstechniken sind ebenfalls möglich.

In vorteilhafter Weise lassen sich die elektronischen Bauelemente beispielsweise zur Erzeugung eines Detektionssignals für die kapazitive Sensorvorrichtung ebenfalls auf dieser Leiterplatte anbringen. Besonders vorteilhaft ist es, diese elektronischen Bauelemente auf der zweiten, der zweiten Elektrode des Messkondensators abgewandten Seite der Leiterplatte aufbringen. Auf diese Weise ist eine Abschirmung der elektronischen Bauelemente zur Erzeugung und Auswertung des Detektionssignals gegenüber dem elektrischen Feld der zweiten Elektrode des Messkondensators mit einfachen Mitteln möglich.

Zur Verbesserung der Abschirmung kann die Leiterplatte mit einer metallischen Schicht versehen sein. Besonders vorteilhaft ist es, wenn eine solche Leiterplatte zusammen mit dem Gehäuse der kapazitiven Sensorvorrichtung einengeschlossenen Raum bildet, in dem die elektronischen Bauelement angeordnet sind.

Die elektrisch leitende Schicht in oder auf der Leiterplatte erzeugt zusammen mit einer Gehäusefläche der Sensorvorrichtung des Ortungsgerätes damit einen Faraday'schen Käfig, so dass der Raum, in dem die elektronischen Bauelemente angeordnet sind effektiv gegen elektromagnetisches Strahlung abgeschirmt ist. Dies ist insbesondere für Präzisionsmessungen mit dem erfindungsgemäßen Ortungsgerät von Nöten, da diese eine gute Abschirmung der zur Erzeugung und Auswertung des Meßsignals notwendigen, elektronischen Bauelemente benötigt.

Durch die erfindungsgemäße Ausgestaltung der Gehäuseflächen der Sensorvorrichtung in Verbindung mit einer vorteilhaften Anordnung der sowohl die elektronischen Bauelemente als auch eine Elektrode des Meßkondensators tragenden Leiterplatte läßt sich somit das Problem des unerwünschten Übersprechens von elektrischen Signalen ohne zusätzlichen Aufwand, das heisst auch ohne zusätzliche Bauteile, lösen, so dass das vorgeschlagene Ortungsgerät in sehr kompakter Bauweise realisierbar ist und als leichtes, handgehaltenes Ortungsgerät vielseitig einsetzbar ist.

Das Gehäuse der Sensorvorrichtung des erfindungsgemäßen Ortungsgerätes ist in vorteilhafter Weise so ausgestaltet, daß dieses die zweite Elektrode des Messkondensators derart räumlich umgreift, daß das zwischen den KondensatorElektroden anliegende Feld eine ausgeprägte Richtungscharakteristik erhält.

Dazu ist das Gehäuse der Sensorvorrichtung beispielsweise aus einem Metall geformt oder auch aus einem metallisierten Kunststoff gezogen. Auch eine elektrisch leitende Beschichtung des Gehäuses der Sensorvorrichtung lässt sich vorteilhaft dazu nutzen, das elektrische Feld des Messkondensators zu auszurichten.

Da das erfindungsgemäße Gehäuse der Sensorvorrichtung nicht nur der mechanischen Stabilität und der elektromagnetischen Abschirmung der elektronischen Bauelemente der Sensorvorrichtung dient, sondern gleichzeitig auch eine Elektrode des Sensor-Kondensators bildet, ist es möglich, das erfindungsgemäße Gehäuse derart auszuformen, daß das zwischen den Elektroden des Sensor-Kondensators entstehende elektrische Feld eine Richtcharakteristik erhält. Dies läßt sich in vorteilhafter Weise, beispielsweise dadurch realisieren, daß das Gehäuse der Sensorvorrichtung einseitig geöffnet ist und die zweite Elektrode des Kondensators seitlich umgreift.

Die erste Elektrode des Messkondensators der kapazitiven Sensorvorrichtung lässt sich in vorteilhafter Weise auch dadurch realisieren, dass diese Elektrode von einer Fläche des Gehäuses der kapazitiven Sensorvorrichtung und einer elektrisch leitenden Fläche der Leiterplatte gebildet wird. Auf diese Weise ist eine weitere vorteilhafte Ausformung des elektrischen Feldes des Messkondensator möglich

Insbesondere läßt sich auf diese Weise mit einfachen mechanischen Mitteln eine Richtcharakteristik des kapazitiven Sensors realisieren, die dazu führt, daß ein starkes Meßsignal in das zu untersuchende Medium unterhalb des Sensors eingreift. Die Ausbildung von Streufeldern in Richtungen, die nicht der Vorzugsrichtung dieser Richtcharakteristik entsprechen, können auf diese Weise effektiv unterdrückt werden, so daß ein intensives Meßsignal ohne große Streufelder genutzt werden kann.

Die kapazitive Sensorvorrichtng mit ihrem einseitig geöffneten Gehäuse wird in ein Gehäuse des Ortungsgerätes eingebaut, dass für das elektrische Messfeld des Sensors transparent ist, so dass das elektrische Messfeld in das zu untersuchende Messobjekt (Wand, Boden oder dergleichen) eintreten kann.

Das Gehäuse des Ortungsgerätes besteht daher beispielsweise aus einem.Kunststoff, der auch die Öffnung des Gehäuses der Sensorvorrichtung abdeckt, so dass die Sensorvorrichtung mechanisch geschützt ist. Das Gehäuse des Ortungsgerätes nimmt auch die weiteren Bedienelemente und beispielsweise auch eine Anzeige.zur Wiedergabe der Messergebnisse auf. In vorteilhafter Weise ist das Gehäuse der Ortungsgerätes so aufgebaut, dass sich eine kompaktes, relativ leichtes und damit handgehaltenes Messgerät ergibt.

### Zeichnung

In der Zeichnung ist ein Ausführungsbeispiel einer kapazitiven Sensorvorrichtung eines erfindungsgemäßen Ortungsgerätes dargestellt, das in der nachfolgenden Beschreibung näher erläutert werden soll. Die Figuren der Zeichnung, deren Beschreibung sowie die auf das erfindungsgemäße Ortungsgerät gerichteten Ansprüche enthalten zahlreiche Merkmale in Kombination. Ein Fachmann wird diese Merkmale auch einzeln betrachten und zu weiteren sinnvollen Kombinationen zusammenfassen.

Es zeigen:
- Figur 1: eine perspektivische Darstellung des Gehäuses der Sensorvorrichtung des erfindungsgemäßen Ortungsgerätes,
- Figur 2: einen Schnitt durch das Gehäuse der erfindungsgemäßen Sensorvorrichtung in schematischer Darstellung,
- Figur 3: eine Darstellung des Gehäuses des erfindungsgemäßen Ortungsgerätes in schematischer Darstellung gemäß Figur 2, wobei eine Verteilung der elektrischen Feldlinien des Sensor-Kondensators zur Verdeutlichung einer Richtungscharakteristik schematisch eingezeichnet ist.

### Beschreibung eines Ausführungsbeispiels

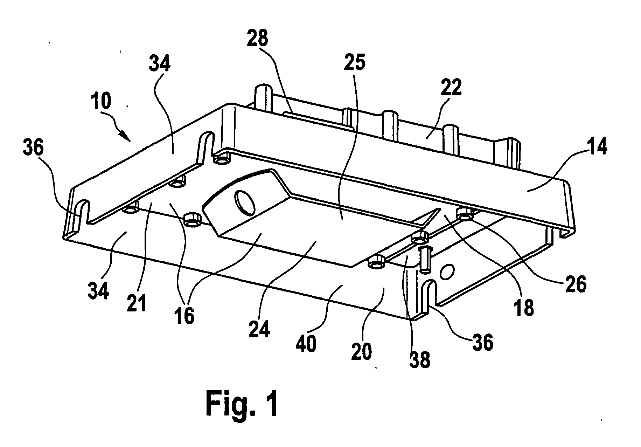

Figur 1 zeigt den prinzipiellen Aufbau der Sensorvorrichtung 10 des erfindungsgemäßen Ortungsgerätes 12. Die Sensorvorrichtung 10 besitzt ein Gehäuse 14 mit einer leitfähigen Oberfläche. Das Gehäuse 14 läßt sich beispielsweise aus einem Metall als einstückiges Druckgußteil oder.aber auch durch einen Formgebungsprozeß aus metallisiertem Kunststoff realisieren. Auch metallisch leitende Beschichtungen sind für das Gehäuse 14 der Sensorvorrichtung möglich

Das Gehäuse 14 ist einseitig, in Richtung eines Meßobjektes offen, umschließt wesentliche Komponenten der Sensorvorrichtung 10 und ist selbst integraler Bestandteil dieser Sensorvorrichtung 10. Die Sensorvorrichtung 10 weist im wesentlichen zwei Bauteilgruppen auf. Die eine Gruppe dieser Bauteile sind elektrische Schaltkreise zur Verarbeitung der Meßsignale. Die zweite Baugruppe der Sensorvorrichtung umfaßt den eigentlichen kapazitiven Sensor, der im erfindungsgemäßen Ortungsgerät durch einen speziell gestalteten Messkondensator 16 realisiert ist.

Die beiden genannten unterschiedlichen Baugruppen sind in zwei voneinander getrennten Teilräumen 20 und 22 des Gehäuses 14 angeordnet. Die Teilräume 20 und 22 sind durch eine Leiterplatte 18 voneinander getrennt, so dass ein erster offener Teilraum 20 und ein zweiter geschlossener Teilraum 22 gebildet wird. Die Leiterplatte 18 ist im Gehäuse 14 an ihren Rändern mit dem Gehäuse 14 fixiert. Das Gehäuse besitzt dazu in dem Ausführungsbeispiel der Figuren 1 bis 3 eine charakteristische Schulter 42, auf die die Leiterplatte 18 aufgelegt ist und mit dem Gehäuse verschraubt ist. Das Gehäuse 14 ist derart geformt, und in einem nicht weiter dargestellten Gehäuse des Ortungsgerätes eingebaut, das die beiden Räume 20 bzw. 22 übereinander angeordnet sind.

Die elektronischen Bauelemente zur Erzeugung und Auswertung des Meßsignals sind im zweiten, geschlossene Teilraum 22 des Gehäuses 14 der Sensorvorrichtung 10 angeordnet. Der zweite Teilraum 22 wird gebildet durch eine Ausbuchtung 28 des Gehäuses 14 sowie durch die Leiterplatte 18, die fest mit dem Gehäuse verbunden ist. In vorteilhafter Weise ist eine metallisierte Schicht 30 auf bzw. in der Leiterplatte 18 integriert, so daß der Teilraum 22 des Gehäuses 14 von einer elektrisch leitenden Oberfläche eingeschlossen ist. Auf diese Weise bildet der Teilraum 22 einen Faraday'schen Käfig (23), der es ermöglicht, die im Teilraum 22 angeordneten elektronischen Bauelemente gegen elektromagnetische Störungen zu isolieren.

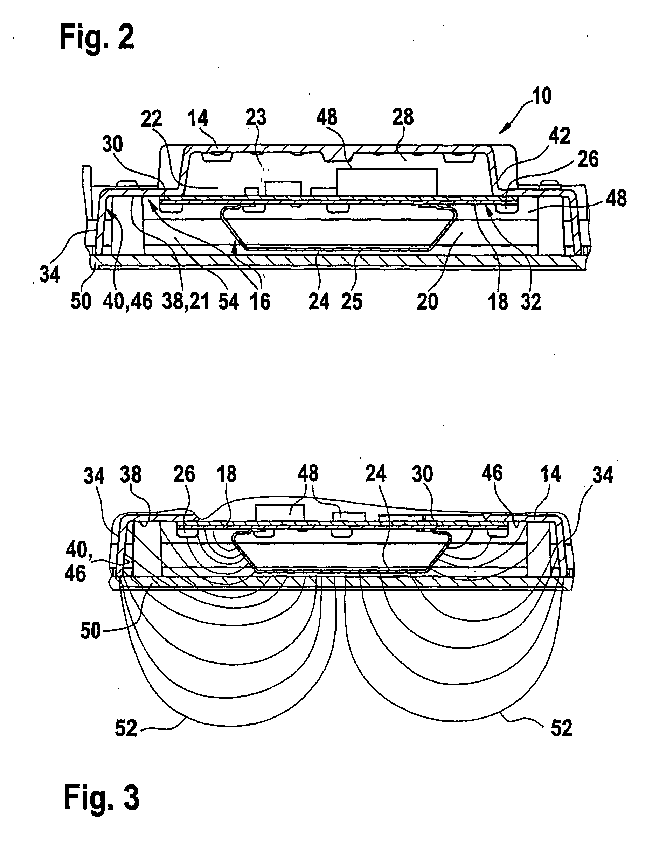

Die Leiterplatte 18 trägt, wie in Figur 2 zu erkennen ist, auf ihrer einen Seite elektrische Schaltkreise 48 zur Erzeugung und Auswertung des Meßsignals, auf der anderen Seite ist eine Elektrode 24 des Messkondensators 16 befestigt. Die Leiterplatte 18 ihrerseits ist an dem Gehäuse 14, beispielsweise durch Schrauben 26, fixiert. Für die Montage der Sensorvorrichtung 10 des erfindungsgemäßen Ortungsgerätes 12 braucht daher lediglich die Leiterplatte 18, auf der.die elektrischen Schaltkreise und eine Elektrode 24 des Meßkondensators 16 bereits in Vormontage aufgebracht worden sind, in das Gehäuse 14 eingebracht werden. Dies führt in vorteilhafter Weise zu einer fertigungstechnischen Vereinfachung sowie auch zu einer Materialeinsparung, da die elektrischen Schaltkreise sowie die Kondensatoranordnung in einem gemeinsamen Gehäuse eingebracht sind. Getrennte Gehäuseanordnungen für die elektrischen Schaltkreise sowie für den Meßkondensator sind in dem erfindungsgemäßen Ortungsgerät nicht notwendig.

Der erste Teilraum 20 des Gehäuses 14 der Sensorvorrichtung 10 wird im Wesentlichen gebildet durch die Oberfläche 32 der Leiterplatte 18 sowie durch Seitenwände 34 des Gehäuses 14. In die Seitenwände 34 sind Aussparungen 36 integriert, die es ermöglichen, das Gehäuse 14 und somit die Sensorvorrichtung 10 in das Gehäuse des Ortungsgerätes zu verankern.

Der erste Teilraum 20 des Gehäuses 14 ist einseitig durch eine Öffnung54 geöffnet und trägt im Wesentlichen den Meßkondensator 16 der Sensorvorrichtung 10 des erfindungsgemäßen Ortungsgerätes 12. Der Messkondensator 16 wird gebildet durch die Innenfläche 38 des Teilraums 20 des Gehäuses 14,die eine erste Elektrode 21 des Messkondensators bildet und durch die auf der Leiterplatte 18 befestigte zweite Elektrode 24. Auf diese Weise ist es möglich, den Messkondensator 16 lediglich durch eine zusätzliche Elektrode 24 zu realisieren. Die erste Elektrode 21 des Meßkondensators 16 wird in vorteilhafter Weise durch das Gehäuse 14 selbst realisiert. Auch aus diesem Grunde besitzt das Gehäuse 14 eine leitfähige Oberfläche 40, die beispielsweise dadurch realisiert wird, daß das Gehäuse 14 der Sensorvorrichtung 10 aus einem Metallteil einstückig geformt ist.

Figur 2 zeigt einen Querschnitt durch die Sensorvorrichtung 10 des erfindungsgemäßen Ortungsgerätes 12 in schematischer Darstellung. Das Gehäuse 14 besitzt eine ausgeprägte Schulter 42, an der die Leiterplatte 18 befestigt ist. In die Leiterplatte 18 ist eine metallisierte Schicht 44 integriert, die in leitender Verbindung mit der elektrisch leitfähigen Oberfläche 46 des Gehäuses 14 der Sensorvorrichtung 10 steht. Die elektrische Verbindung zwischen der metallisierten Schicht 44 der Leiterplatte 18 und dem Gehäuse 14 kann beispielsweise durch die Schrauben 26 zur mechanischen Fixierung der Leiterplatte an dem Gehäuse erzeugt werden.

Auf der der Elektrode 24 abgekehrten Seite der Leiterplatte 18 sind diverse elektronische Bauelemente 48 angeordnet, die der Signalerzeugung und im vorliegenden Ausführungsbeispiel der Figur 2 auch der Auswertung des Meßsignals dienen. Der Teilraum 22, der durch die Ausbuchtung 28 des Gehäuses 14 sowie die Leiterplatte 18 gebildet wird, ist in geschlossener Weise von einer elektrisch leitfähigen Oberfläche umgeben, so daß es sich bei diesem Teilraum 22 um einen Faraday'schen Käfig 21 handelt, der es ermöglicht, die im Teilraum 22 angeordneten elektronischen Bauelemente 48 gegen elektromagnetische Strahlung abzuschirmen.

Auf der dem Teilraum 22 abgewandten Seite der Leiterplatte 18 ist die zweite Elektrode 24 des Messkondensators 16 mechanisch mit der Leiterplatte 18 verbunden. Die erste Elektrode 21 des Messkondensators 16 der Sensorvorrichtung 10 des erfindungsgemäßen Ortungsgerätes 12 wird in diesem Ausführungsbeispiel gebildet durch die leitfähige Oberfläche 46 des Innenraums 48 des ersten Teilraums 20 des Gehäuses 14. Der erste Teilraum 20 kann, wie im Ausführungsbeispiel der Figur 2 dargestellt, durch eine Wand 50 verschlossen sein, solange diese kein Hindernis für das elektrische Feld des Messkondensators 16 darstellt.

Aus diesem Grunde kann die Wand 50 beispielsweise durch eine Seite eines Kunststoffgehäuses des erfindungsgemäßen Ortungsgerätes 12 realisiert werden. Das erfindungsgemäße Ortungsgerät 12 würde in diesem Fall mit der Gehäusewand 50 über die zu vermessende Struktur, beispielsweise eine Decke oder ein Boden geführt werden. Die Wand 50 dient dem mechanischen Schutz der Elektrode 24 des Meßkondensators 16 sowie weiterer eventuell im Teilraum 20 angeordneter Bauelemente 48 der Sensorvorrichtung 10.

In einfacher Weise läßt sich die Elektrode 24 des Meßkondensators 16 beispielsweise als Stanzbiegeteil ausformen. Die Elektrode 24 weißt vorteilhafterweise eine parallel zur Leiterplatte 18 angeordnete Fläche 25 auf. Das Gehäuse 14 kann einstückig als Druckgußteil aus Metall oder aber auch aus einem metallisierten Kunststoff gezogen werden.

Figur 3 zeigt einen Querschnitt durch die Sensorvorrichtung 10 des erfindungsgemäßen Ortungsgerätes 12, in den in schematischer Weise der Verlauf der Feldlinien des Meßkondensators bei Betrieb des Ortungsgerätes zur Verdeutlichung eingezeichnet sind. Die Elektroden des Messkondensators werden gebildet zum Einen aus der Elektrode 24, die auf der Leiterplatte 18 befestigt ist und zum anderen durch die leitfähige innere Oberfläche 46 des Gehäuses 14 im Bereich des Teilraumes 20.

Durch die erfindungsgemäße Ausgestaltung des Gehäuses 14 läßt sich eine gewünschte Richtungscharakteristik des elektrischen Feldes 52 des Meßkondensators erreichen. Dies wird beispielsweise dadurch erreicht, daß die Seitenwände 34 des Gehäuses 14 der Sensorvorrichtung 10 die Leiterplatte 18 und damit die auf ihr angebrachte Elektrode 24 seitlich umgreifen. Durch die Form des Teilraumes 20 kann somit die Richtcharakteristik des elektrischen Feldes 52, welches zur Detektion der beispielsweise in einer Wand eingeschlossenen Objekte dient, in gewünschter Weise gerichtet werden. Die Form des Gehäuses 14 ist in den Figuren 1, 2 und 3 nur in schematischer Weise angedeutet, um das zugrundeliegende Prinzip zu verdeutlichen. In vorteilhafter Weise lassen sich weitere Gehäuseformen der Sensorvorrichtung 10 realisieren, mit denen das elektrische Feld eines Messkondensators 16 einer solchen Sensorvorrichtung optimiert werden kann.

So kann beispielsweise, wie in Figur 3 angedeutet, die erste Kondensatorelektrode auch durch die leitfähige Oberflächen 46 des Innenraums 48 des ersten Teilraums 20 und eine leitfähige Schicht auf der Oberfläche der Leiterplatte 18 gebildet werden.

Das elektrische Feld 52 tritt in gerichteter Form aus dem Gehäuse 14 der Sensorvorrichtung 10 und somit auch aus dem Gehäuse des Ortungsgerätes 12 heraus und dringt beispielsweise in eine zu vermessende Wand ein, wenn das Ortungsgerät 12 mit seiner Gehäusewand 50 auf die Wand aufgesetzt wird.

Die in den Figuren 1 bis 3 beschriebene Sensorvorrichtung 10 wird in ein nicht weiter dargestelltes Gehäuse des Ortungsgerätes 12 integriert. Dieses Gehäuse des Ortungsgerätes weist neben der Sensorvorrichtung 10 zumindest noch einen Anzeigeteil, beispielsweise ein Display, auf dem Ortsangaben über ein mit dem Ortungsgerät aufgespürtes Objekt in einer Wand, Decke oder Boden dargestellt werden können. So kann auf einem solchen Display beispielsweise die genaue Lage eines eingeschlossenen Objektes relativ zur Lage des Ortungsgerätes angezeigt werden. Auf die Anzeigeeinheit soll hier nicht weiter eingegangen werden, da sie nicht Gegenstand der Erfindung ist. Das Gehäuse des erfindungsgemäßen Ortungsgerätes besitzt darüber hinaus Schaltmittel, um entsprechende Meßvorgänge mit dem Gerät zu initiieren.

Ebenfalls möglich ist die Integration einer Schnittstelle in das Gehäuse des Ortungsgerätes zur Übertragung von Meßdaten an ein weiteres Gerät, beispielsweise einen Computer oder ein zweites graphisches Display.

Das erfindungsgemäße Ortungsgerät ist nicht auf die in den Figuren 1 bis 3 dargestellte Ausführungsform beschränkt.

Insbesondere ist das erfindungsgemäße Ortungsgerät nicht beschränkt auf die in den Figuren dargestellte Gehäuseform. Vorteilhafte weiterbildungen der Form des Gehäuses 14 der Sensorvorrichtung 10 des Ortungsgerätes 12 sind möglich.

Das erfindungsgemäße Ortungsgerät mit seiner Sensorvorrichtung 10 ist nicht beschränkt auf das Auffinden dielektrischer Einschlüsse in Wandmaterialien, wie beispielsweise Metallobjekte oder auch Kunststoffleitungen, sondern kann darüber hinaus bei allen anderen Anwendungen, bei denen eine gerichtete Vermessung der Dielektrizitätskonstante eines Mediums gewünscht ist, eingesetzt werden. In diesem Zusammenhang sei beispielsweise auf die Messung des Feuchtegehalts von Wänden verwiesen.

Das erfindungsgemäße Ortungsgerät ist nicht beschränkt auf die Detektion von Einschlüssen in Wänden, Decken und/oder Böden, sondern kann generell zur Detektion und zum Nachweis von eingeschlossenen, dem menschlichen Auge nicht sichtbaren Gegenständen genutzt werden.

## Patentansprüche

1. Ortungsgerät, insbesondere handgehaltenes Ortungsgerät zur Detektion von Einschlüssen in Wänden, Decken und/oder Böden, mit einer in einem Gehäuse (14) angeordneten kapazitiven Sensorvorrichtung (10), mit Mitteln zur Erzeugung eines Detektionssignals der mindestens einen kapazitiven Sensorvorrichtung (10), mit einer mit der Sensorvorrichtung verbundenen Steuer- und Auswerteeinheit zur Ermittlung von Messwerten aus dem Detektionssignal, sowie mit einer Ausgabeeinheit zur Wiedergabe von Messwerten der kapazitiven Sensorvorrichtung (10), **dadurch gekennzeichnet, dass** ein Messkondensator (16) der kapazitiven Sensorvorrichtung (10) eine erste Elektrode (21) aufweist, die eine Fläche des Gehäuses (14) der Sensorvorrichtung (10) umfasst.

2. Ortungsgerät nach Anspruch 1, **dadurch gekennzeichnet, dass** das Gehäuse (14) der Sensorvorrichtung (10) einen Raum (20), insbesondere einen Hohlraum, für die Aufnahme einer zweiten Kondensator-Elektrode (24) des Messkondensators (16) aufweist.

3. Ortungsgerät nach Anspruch 1 oder 2, **dadurch gekennzeichnet, dass** eine zweite Kondensatorelektrode (24) des mindestens einen Messkondensators (16) der kapazitiven Sensorvorrichtung (10) auf einer Leiterplatte (18) angebracht ist, die mechanisch mit dem Gehäuse (14) der kapazitiven Sensorvorrichtung (10) verbunden ist.

4. Ortungsgerät nach Anspruch 3, **dadurch gekennzeichnet, dass** die zweite Elektrode (24) des Messkondensators (16) eine Fläche (25) besitzt, die im Wesentlichen parallel zur Leiterplatte (18) verläuft.

5. Ortungsgerät nach Anspruch 3 oder 4, **dadurch gekennzeichnet, dass** die Leiterplatte (18) derart im Gehäuse (14) der Sensorvorrichtung (10) angeordnet ist, dass ein zweiter, im Wesentlichen geschlossener Raum (22) durch die Leiterplatte (18) und das Gehäuse (14) der Sensorvorrichtung (10) gebildet wird.

6. Ortungsgerät nach einem der Ansprüche 3 bis 5, **dadurch gekennzeichnet, dass** das Gehäuse (14) der Sensorvorrichtung (10) eine Schulter (42) aufweist, an die die Leiterplatte (18) angelegt und befestigt ist.

7. Ortungsgerät nach Anspruch 5 oder 6, **dadurch gekennzeichnet, dass** elektronische Bauelemente (48) in dem zweiten, im Wesentlichen geschlossenen Raum (22) des Gehäuses (14) der Sensorvorrichtung (10) angeordnet sind.

8. Ortungsgerät nach Anspruch 7, **dadurch gekennzeichnet, dass** die elektronischen Bauelemente (48) auf der der zweiten Elektrode (24) des Messkondensators (16) abgewandten Seite der Leiterplatte (18) angeordnet sind.

9. Ortungsgerät nach einem der vorhergehenden Ansprüche 5 bis 8, **dadurch gekennzeichnet, dass** der zweite, im Wesentlichen geschlossenen Raum (22) des Gehäuses (14) einen Faraday'schen Käfig (23) für die darin angeordnete Bauelemente (48) bildet.

10. Ortungsgerät nach Anspruch 9, **dadurch gekennzeichnet, dass** der Faraday'schen Käfig (23) elektronische Bauelemente (48) zur Erzeugung und/oder Auswertung eines Detektionssignals der kapazitiven Sensorvorrichtung (10) umschliesst.

11. Ortungsgerät nach einem der vorhergehenden Ansprüche 3 bis 10, **dadurch gekennzeichnet, dass** die Leiterplatte (18) mindestens eine metallische Schicht (30) aufweist, die eine Abschirmung der zweiten Elektrode (24) des Messkondensators (16) der kapazitiven Sensorvorrichtung (10) bewirkt.

12. Ortungsgerät nach einem der vorhergehenden Ansprüche, **dadurch gekennzeichnet, dass** die erste Elektrode (21) des Messkondensators (16) der kapazitiven Sensorvorrichtung (10) von einer Fläche des Gehäuses der kapazitiven Sensorvorrichtung (10) und einer elektrisch leitenden Fläche (30) der Leiterplatte (18) gebildet wird.

13. Ortungsgerät nach einem der vorhergehenden Ansprüche, **dadurch gekennzeichnet, dass** das Gehäuse (14) der kapazitiven Sensorvorrichtung (10) aus Metall ist.

14. Ortungsgerät nach einem der vorhergehenden Ansprüche 1 bis 12, **dadurch gekennzeichnet, dass** das Gehäuse (14) der kapazitiven Sensorvorrichtung (10) aus metallisiertem Kunststoff ist oder eine metallisch leitende Beschichtung aufweist.

15. Ortungsgerät nach einem der vorhergehenden Ansprüche, **dadurch gekennzeichnet, dass** das Gehäuse (14) der kapazitiven Sensorvorrichtung (10) einstückig ausgeformt ist.

16. Ortungsgerät nach einem der vorhergehenden Ansprüche, **dadurch gekennzeichnet, dass** das Gehäuse (14) der kapazitiven Sensorvorrichtung (10) die zweite Elektrode (24) des Messkondensators (16) zumindest teilweise umgreift.

17. Ortungsgerät nach Anspruch 16, **dadurch gekennzeichnet, dass** das Gehäuse der kapazitiven Sensorvorrichtung die zweite Elektrode (24) des Messkondensators (16) derart räumlich umgreift, dass ein zwischen den Messkondensator-Elektroden (21,24) anliegendes elektrisches Feld (52) eine ausgeprägte Richtcharakteristik aufweist.

18. Ortungsgerät nach einem der vorhergehenden Ansprüche 3 bis 17, **dadurch gekennzeichnet, dass** das Gehäuse (14) der kapazitiven Sensorvorrichtung (10) auf der der Leiterplatte (18) abgewandten Seite der zweiten Elektrode (24) des Messkondensators (16) eine Öffnung (54) aufweist.

19. Ortungsgerät nach Anspruch 18, **dadurch gekennzeichnet, dass** die Öffnung (54) im Gehäuse (14) der kapazitiven Sensorvorrichtung (10) von einem für das elektrische Feld (52) des Messkondensators (16) transparenten Gehäuseteil (50) eines Gehäuses des Ortungsgerätes (12) überdeckt ist.

20. Ortungsgerät nach einem der vorhergehenden Ansprüche 17 bis 19, **dadurch gekennzeichnet, dass** die Richtcharakteristik des Messkondensators (16) derart ausgeprägt ist, dass ein zwischen den Messkondensator-Elektroden (21) anliegendes elektrisches Feld (52) durch die Öffnung (54) im Gehäuse (14) der kapazitiven Sensorvorrichtung (10) sowie durch das Gehäuse (50) des Ortungsgerätes (12) hindurch in ein Medium auf der dem Messkondensator (16) abgewandten Seite des für das elektrische Feld (52) des Messkondensators (16) transparenten Gehäuseteils (50) des Gehäuses des Ortungsgerätes (12) eingreift.

21. Ortungsgerät nach einem der vorhergehenden Ansprüche 16 bis 20, **dadurch gekennzeichnet, dass** das Gehäuse (14) der kapazitiven Sensorvorrichtung (10) die zweite Elektrode (24) des Messkondensators (16) derart räumlich umgreift, dass die Ausbildung von Streufeldern in Richtungen die nicht der Vorzugsrichtung der Richtcharakteristik entsprechen, stark unterdrückt ist.

## Claims

1. Locating device, in particular hand-held locating device for detecting items enclosed in walls, ceilings and/or floors, having a capacitive sensor device (10) which is arranged in a housing (14), having means for generating a detection signal of the at least one capacitive sensor device (10), having a control and evaluation unit which is connected to the sensor device and has the purpose of determining measured values from the detection signal, and having an output unit for reproducing the measured values of the capacitive sensor device (10), **characterized in that** a measuring capacitor (16) of the capacitive sensor device (10) has a first electrode (21) which comprises a surface of the housing (14) of the sensor device (10).

2. Locating device according to Claim 1, **characterized in that** the housing (14) of the sensor device (10) has space (20), in particular a cavity, for accommodating a second capacitor electrode (24) of the measuring capacitor (16).

3. Locating device according to Claim 1 or 2, **characterized in that** a second capacitor electrode (24) of the at least one measuring capacitor (16) of the capacitive sensor device (10) is mounted on a printed circuit board (18) which is mechanically connected to the housing (14) of the capacitive sensor device (10).

4. Locating device according to Claim 3, **characterized in that** the second electrode (24) of the measuring capacitor (16) has a surface (25) which extends essentially parallel to the printed circuit board (18).

5. Locating device according to Claim 3 or 4, **characterized in that** the printed circuit board (18) is arranged in the housing (14) of the sensor device (10) in such a way that a second, essentially enclosed space (22) is formed by the printed circuit board (18) and the housing (14) of the sensor device (10).

6. Locating device according to one of Claims 3 to 5, **characterized in that** the housing (14) of the sensor device (10) has a shoulder (42) to which the printed circuit board (18) is applied and attached.

7. Locating device according to Claim 5 or 6, **characterized in that** electronic components (48) are arranged in the second, essentially enclosed space (22) of the housing (14) of the sensor device (10).

8. Locating device according to Claim 7, **characterized in that** the electronic components (48) are arranged on the side of the printed circuit board (18) which faces away from the second electrode (24) of the measuring capacitor (16).

9. Locating device according to one of the preceding Claims 5 to 8, **characterized in that** the second, essentially enclosed space (22) of the housing (14) forms a Faraday cage (23) for the components (48) arranged therein.

10. Locating device according to Claim 9, **characterized in that** the Faraday cage (23) encloses electronic components (48) for generating and/or evaluating a detection signal of the capacitive sensor device (10).

11. Locating device according to one of the preceding Claims 3 to 10, **characterized in that** the printed circuit board (18) has at least one metallic layer (30) which screens off the second electrode (24) of the measuring capacitor (16) from the capacitive sensor device (10).

12. Locating device according to one of the preceding claims, **characterized in that** the first electrode (21) of the measuring capacitor (16) of the capacitive sensor device (10) is formed by a surface of the housing of the capacitive sensor device (10) and an electrically conductive surface (30) of the printed circuit board (18).

13. Locating device according to one of the preceding claims, **characterized in that** the housing (14) of the capacitive sensor device (10) is made of metal.

14. Locating device according to one of the preceding Claims 1 to 12, **characterized in that** the housing (14) of the capacitive sensor device (10) is made of metallized plastic or has a metallically conductive coating.

15. Locating device according to one of the preceding claims, **characterized in that** the housing (14) of the capacitive sensor device (10) is moulded in one piece.

16. Locating device according to one of the preceding claims, **characterized in that** the housing (14) of the capacitive sensor device (10) at least partially engages around the second electrode (24) of the measuring capacitor (16).

17. Locating device according to Claim 16, **characterized in that** the housing of the capacitive sensor device spatially engages around the second electrode (24) of the measuring capacitor (16) in such a way that an electrical field (52) between the measuring capacitor electrodes (21, 24) has a distinctive directional characteristic.

18. Locating device according to one of the preceding Claims 3 to 17, **characterized in that** the housing (14) of the capacitive sensor device (10) has an opening (54) on the side of the second electrode (24) of the measuring capacitor (16) which faces away from the printed circuit board (18).

19. Locating device according to Claim 18, **characterized in that** the opening (54) in the housing (14) of the capacitive sensor device (10) is covered by a housing part (50) of a housing of the locating device (12) which is transparent to the electrical field (52) of the measuring capacitor (16).

20. Locating device according to one of the preceding Claims 17 to 19, **characterized in that** the directional characteristic of the measuring capacitor (16) is configured such that an electrical field (52) between the measuring capacitor electrodes (21) acts through the opening (54) in the housing (14) of the capacitive sensor device (10) and through the housing (50) of the locating device (12) in a medium on the side, facing away from the measuring capacitor (16), of that housing part (50) of the housing of the locating device (12) which is transparent to the electrical field (52) of the measuring capacitor (16).

21. Locating device according to one of the preceding Claims 16 to 20, **characterized in that** the housing (14) of the capacitive sensor device (10) spatially engages around the second electrode (24) of the measuring capacitor (16) in such a way that the formation of stray fields in directions which do not correspond to the preferred direction of the directional characteristic is suppressed to a high degree.

## Revendications

1. Appareil de repérage, notamment appareil de repérage à main, pour détecter des éléments encastrés dans des murs, des plafonds et/ou des sols, comportant un dispositif détecteur capacitif (10) logé dans un boîtier (4), les moyens pour générer un signal de détection au moins du dispositif détecteur capacitif (10), une unité de commande et d'exploitation reliée au dispositif détecteur pour déterminer les valeurs de mesure à partir du signal de détection ainsi qu'une unité d'émission pour reproduire les valeurs de mesure du dispositif détecteur capacitif (10),
**caractérisé par**
un condensateur de mesure (16) du dispositif détecteur capacitif (10) ayant une première électrode (21) qui comprend une surface du boîtier (14) du dispositif détecteur (10).

2. Appareil de repérage selon la revendication 1,
**caractérisé en ce que**
le boîtier (14) du dispositif détecteur (10) comporte un volume (20), notamment une cavité, pour recevoir une seconde électrode (24) du condensateur de mesure (16).

3. Appareil de repérage selon les revendications 1 ou 2,
**caractérisé en ce qu'**
une seconde électrode de condensateur (24) d'au moins un condensateur de mesure (16) du dispositif détecteur capacitif (10) est installée sur une plaque de circuit (18) reliée mécaniquement au boîtier (14) du dispositif détecteur capacitif (10).

4. Appareil de repérage selon la revendication 3,
**caractérisé en ce que**
la seconde électrode (24) du condensateur de mesure (16) a une surface (25) essentiellement parallèle à la plaque de circuit (18).

5. Appareil de repérage selon la revendication 3 ou 4,
**caractérisé en ce que**
la plaque de circuit (18) est logée dans le boîtier (14) du dispositif détecteur (10) pour former un second volume (22) pratiquement fermé avec la plaque de circuit (18) et le boîtier (14) du dispositif détecteur (10).

6. Appareil de repérage selon l'une des revendications 3 à 5,
**caractérisé en ce que**
le boîtier (14) du dispositif détecteur (10) a un épaulement (42) contre lequel s'appuie et se fixe la plaque de circuit (18).

7. Appareil de repérage selon les revendications 5 ou 6,
**caractérisé par**
des composants électroniques (48) logés dans la seconde chambre (22) pratiquement fermée du boîtier (14) du dispositif détecteur (10).

8. Appareil de repérage selon la revendication 7,
**caractérisé en ce que**
les composants électroniques (48) sont prévus sur le côté de la plaque de circuit (18) non tourné vers la seconde électrode (24) du condensateur de mesure (16).

9. Appareil de repérage selon l'une des revendications précédentes 5 à 8,
**caractérisé en ce que**
la seconde chambre (22) pratiquement fermée du boîtier (14) constitue une cage de Faraday (23) pour les composants qu'elle loge.

10. Appareil de repérage selon la revendication 9,
**caractérisé en ce que**
la cage de Faraday (23) entoure des composants électroniques (48) pour générer et/ou exploiter un signal de détection du dispositif détecteur capacitif (10).

11. Appareil de repérage selon l'une des revendications 3 à 10,
**caractérisé en ce que**
la plaque de circuit (18) comporte au moins une couche métallique (30) qui constitue un blindage de la seconde électrode (24) du condensateur de mesure (16) du dispositif détecteur capacitif (10).

12. Appareil de repérage selon l'une des revendications précédentes,
**caractérisé en ce que**
la première électrode (21) du condensateur de mesure (16) du dispositif détecteur capacitif (10) est formée par une surface du boîtier du dispositif détecteur capacitif (10) et par une surface électroconductrice (30) de la plaque de circuit (18).

13. Appareil de repérage selon l'une des revendications précédentes,
**caractérisé en ce que**
le boîtier (14) du dispositif détecteur capacitif (10) est en métal.

14. Appareil de repérage selon l'une des revendications précédentes 1 à 12,
**caractérisé en ce que**
le boîtier (14) du dispositif détecteur capacitif (10) est en matière plastique métallisée ou a un revêtement métallique conducteur.

15. Appareil de repérage selon l'une des revendications précédentes,
**caractérisé en ce que**
le boîtier (14) du dispositif détecteur capacitif (10) est réalisé en une seule pièce.

16. Appareil de repérage selon l'une des revendications précédentes,
**caractérisé en ce que**
le boîtier (14) du dispositif détecteur capacitif (10) entoure au moins en partie la seconde électrode (24) du condensateur de mesure (16).

17. Appareil de repérage selon la revendication 16,
**caractérisé en ce que**
le boîtier du dispositif détecteur capacitif entoure la seconde électrode 24 du condensateur de mesure 16 dans l'espace de façon que le champ électrique 52 appliqué entre les électrodes du condensateur de mesure 21, 24 présente une caractéristique directionnelle accentuée.

18. Appareil de repérage selon l'une des revendications précédentes 3 à 17,
**caractérisé en ce que**
le boîtier 14 du dispositif détecteur capacitif 10 présente une ouverture 54 sur le côté de la seconde électrode 24 du condensateur de mesure 16 à l'opposé de la plaque de circuit 18.

19. Appareil de repérage selon la revendication 18,
**caractérisé en ce que**
l'ouverture 54 du boîtier 14 du dispositif détecteur capacitif 10 est couverte par une partie 50 d'un boîtier de l'appareil de repérage 12 transparente pour le champ électrique 52 du condensateur de mesure 16.

20. Appareil de repérage selon l'une des revendications précédentes 17 à 19,
**caractérisé en ce que**
la caractéristique directionnelle du condensateur de mesure 16 est accentuée de façon qu'un champ électrique 52 appliqué entre les électrodes du condensateur de mesure 21 passe par l'ouverture 54 du boîtier 14 du dispositif détecteur capacitif 10 et à travers le boîtier 50 de l'appareil de localisation 12 pour arriver dans un milieu sur le côté de la partie 50 du boîtier de l'appareil de repérage 12, transparente au champ électrique 52 du condensateur de mesure 16, du côté opposé à celui du condensateur de mesure 16.

21. Appareil de repérage selon l'une des revendications précédentes 16 à 20,
**caractérisé en ce que**
le boîtier (14) du dispositif détecteur capacitif (10) entoure la seconde électrode (24) du condensateur de mesure (16) dans l'espace pour que le développement des champs dispersés dans les directions qui ne correspondent pas à la direction préférentielle de la caractéristique directionnelle soit fortement atténué.
